# EUROPÄISCHE PATENTSCHRIFT

(11) **EP 3 708 482 B1**
(45) Veröffentlichungstag und Bekanntmachung des Hinweises auf die Patenterteilung: **07.06.2023**
(21) Anmeldenummer: 20160036.8
(22) Anmeldetag: 28.02.2020
(51) Int. Cl.: B63H 25/52, F16C 17/02, F16C 17/24, G01B 5/14, G01N 3/56, B63H 25/38

(54) **RUDER FÜR WASSERFAHRZEUGE MIT EINER LAGERSPIELMESSVORRICHTUNG, VERFAHREN ZUR MESSUNG EINES LAGERSPIELS IN EINEM RUDER UND LAGERSPIELMESSVORRICHTUNG FÜR EIN RUDER**
RUDDER FOR WATERCRAFT WITH A BEARING CLEARANCE MEASURING DEVICE, METHOD FOR MEASURING BEARING CLEARANCE IN A RUDDER AND A BEARING CLEARANCE MEASURING DEVICE FOR A RUDDER
GOUVERNAIL POUR EMBARCATIONS DOTÉ D'UN DISPOSITIF DE MESURE DU JEU DE PALIER, PROCÉDÉ DE MESURE D'UN JEU DE PALIER DANS UN GOUVERNAIL ET DISPOSITIF DE MESURE DU JEU DE PALIER POUR UN GOUVERNAIL

(30) Priorität: 13.03.2019 EP 19162575
(43) Veröffentlichungstag der Anmeldung: 16.09.2020
(73) Patentinhaber: Becker Marine Systems GmbH, 21079 Hamburg (DE)
(72) Erfinder: KUHLMANN, Henning, 21079 Hamburg (DE)
(74) Vertreter: RGTH

(56) Entgegenhaltungen:
- KR-A- 20100 136 590
- KR-A- 20120 118 117
- US-A- 6 080 982

## Beschreibung

Die vorliegende Erfindung betrifft ein Ruder für Wasserfahrzeuge, insbesondere für Schiffe, umfassend einen in einem Kokerrohr angeordneten Ruderschaft, ein mit dem Ruderschaft verbundenes Ruderblatt, eine zwischen Kokerrohr und Ruderschaft angeordnete Lagerbuchse und eine Lagerspielmessvorrichtung. Ferner betrifft die vorliegende Erfindung ein Verfahren zur Messung eines Lagerspiels in einem Ruder und ein System bestehend aus einem Ruderkokerrohr und einer Lagerspielmessvorrichtung für ein Ruder.

### Technologischer Hintergrund

Ruder für Wasserfahrzeuge, insbesondere für Schiffe, umfassen ein an einem Ruderschaft befestigtes Ruderblatt. Der Ruderschaft ist meist in einem am Heck des Schiffes angeordneten Kokerrohr um die Ruderschaftachse drehbar geführt. Zur Lagerung des Ruderschaftes in dem Kokerrohr ist mindestens eine Lagerbuchse vorgesehen, welche vorzugsweise im Bereich des unteren Endes des Kokerrohrs angeordnet ist.

Aufgrund der großen im Betrieb auftretenden Ruderkräfte unterliegt die Lagerbuchse einer starken Abnutzung, welche zu Schäden des Ruders oder gar zum Ausfall der kompletten Ruderanlage führen kann. Das durch die Abnutzung hervorgerufene Lagerspiel, das heißt das Spiel des Ruders in der Lagerbuchse bzw. im Ruderkoker, muss aus diesem Grund regelmäßig gemessen werden. Im Stand der Technik wird die Lagerspielmessung meist manuell von qualifizierten Tauchern unter Wasser auf der Backbord- oder auf der Steuerbordseite des Ruders durchgeführt.

Aus der WO 2011/117301 A1 ist ein Ruder für Schiffe bekannt. Das Ruder umfasst ein Lager zum Lagern eines Ruderblattes oder eines Ruderschafts am Schiffsrumpf. Das Lager weist einen Innenlagerabschnitt und einen gleitend am Innenlagerabschnitt anliegenden Außenlagerabschnitt auf. Ferner ist ein Verschleißstift vorgesehen, welcher an dem Außenlagerabschnitt oder an dem Innenlagerabschnitt angeordnet ist und ferner gleitend an dem anderen von Innenlagerabschnitt und Außenlagerabschnitt anliegt.

Aus der WO 2015/150266 A1 der Anmelderin ist eine elektronische Lagerspielmessvorrichtung für ein Ruder bekannt, welche einen Messgrößenaufnehmer mit einer Verschleißfläche aufweist. Der Messgrößenaufnehmer steht mit der Verschleißfläche in einer gleitenden Anlage mit einem Lagerelement eines Lagers. Der Messgrößenaufnehmer ist nicht stiftförmig ausgebildet.

Die KR 2012-0118117 A offenbart ein Verfahren zum Untersuchen eines Spaltes zwischen einem Ruderschaft und einem Halslager eines Schiffes. Eine Messvorrichtung umfasst einen Halter und einen Messstift, der in dem Halter federnd gelagert ist.

Aus der KR 2010-0136590 A ist ein weiteres Verfahren zur Überprüfung der Funktion eines Ruderlagers bekannt.

### Darstellung der Erfindung: Aufgabe, Lösung, Vorteile

Der vorliegenden Erfindung liegt die Aufgabe zugrunde, ein Ruder für Wasserfahrzeuge, insbesondere für Schiffe, mit einer wartungsarmen Lagerspielmessvorrichtung bereitzustellen, mit welcher eine, kosteneffiziente und bevorzugt automatische Messung eines Lagerspiels ermöglicht wird, wobei die Messung direkt die für eine Quantifizierung des Lagerspiels relevanten Messwerte liefert. Ferner ist es Aufgabe der vorliegenden Erfindung ein Verfahren zur Messung eines Lagerspiels in einem Ruder, und eine Lagerspielmessvorrichtung für ein Ruder bereitzustellen, mit welchen die vorgenannten Vorteile erzielt werden.

Zur Lösung der der Erfindung zugrundeliegenden Aufgabe wird ein Ruder für Wasserfahrzeuge, insbesondere für Schiffe, umfassend einen in einem Kokerrohr angeordneten Ruderschaft, ein mit dem Ruderschaft verbundenes Ruderblatt und eine zwischen Kokerrohr und Ruderschaft angeordnete Lagerbuchse vorgeschlagen, wobei ferner eine Lagerspielmessvorrichtung vorgesehen ist, welche mindestens einen Sensor zur abriebfreien Messung eines Lagerspiels umfasst, wobei der mindestens eine Sensor kontaktfrei und beabstandet zu dem Ruderschaft angeordnet ist, und/oder wobei der mindestens eine Sensor ein Wirbelstromsensor oder ein Ultraschallsensor ist.

Das Ruder für Wasserfahrzeuge ist insbesondere für große Schiffe wie Passagierschiffe, Containerschiffe, Tanker, Bulker oder Fähren ausgebildet.

Bei einem Wasserfahrzeug mit einem Ruder ist das Ruderblatt des Ruders üblicherweise an einem Ruderschaft des Ruders befestigt. Der Ruderschaft ist mittels einer im Rumpf des Wasserfahrzeugs angeordneten Ruderanlage drehbar mit dem Wasserfahrzeug verbunden. Zur Aufnahme von im Betrieb auftretenden Ruderkräften kann der Ruderschaft in einem aus dem Rumpf des Wasserfahrzeugs nach unten herausragenden Kokerrohr geführt sein. Dabei ist der Ruderschaft in dem Kokerrohr mit Lagern, insbesondere mit Halslagern, drehbar gelagert. Das Lager weist mindestens eine Lagerbuchse auf, welche entweder am Ruderschaft und oder am Kokerrohr angeordnet ist. Die Lagerbuchse kann innenseitig und unverdrehbar im Kokerrohr angeordnet sein. Der Ruderschaft oder eine weitere am Ruderschaft befestigte Lagerbuchse steht in gleitender Anlage mit der im Kokerrohr angeordneten Lagerbuchse. Alternativ oder zusätzlich kann auch eine Lagerbuchse auf einer Außenseite des Kokerrohrs angeordnet sein. In diesem Fall ist das Ruder über das Ruderblatt außenseitig an der Lagerbuchse an dem Kokerrohr gelagert, wobei eine weitere Lagerbuchse am Ruderblatt vorgesehen sein kann, welche in gleitender Anlage mit der auf der Außenseite des Kokerrohrs angeordneten Lagerbuchse steht.

Die vorliegende Erfindung ist für alle der vorstehend genannten Ausgestaltungen und Anordnungen der Lager bzw. der Lagerbuchsen geeignet.

Eine weitere Lösung der der Erfindung zugrundeliegenden Aufgabe besteht daher auch in der Bereitstellung eines Ruders für Wasserfahrzeuge, insbesondere für Schiffe, umfassend einen in einem Kokerrohr angeordneten Ruderschaft, ein mit dem Ruderschaft verbundenes Ruderblatt und eine zwischen Kokerrohr und Ruderblatt angeordnete Lagerbuchse sowie eine Lagerspielmessvorrichtung, wobei die Lagerspielmessvorrichtung mindestens einen Sensor zur abriebfreien Messung eines Lagerspiels umfasst, wobei der mindestens eine Sensor kontaktfrei und beabstandet zu dem Ruderschaft angeordnet ist, und/oder wobei der mindestens eine Sensor ein Wirbelstromsensor oder ein Ultraschallsensor ist..

Im Rahmen der vorliegenden Erfindung wird unter einer abriebfreien Messung eines Lagerspiels eine Messung verstanden, bei der der Sensor im Wesentlichen keinem Abrieb unterliegt. Synonym mit den Begriffen "abriebfrei" und "Abrieb" können auch die Begriffe "verschleißfrei" und "Verschleiß" verwendet werden. Da der Sensor keinem Abrieb oder Verschleiß ausgesetzt ist, ist die Lagerspielmessvorrichtung besonders wartungsfrei. Unter einem Lagerspiel wird ein, insbesondere radiales, Spiel des Ruderschafts im Kokerrohr bzw. in der Lagerbuchse verstanden.

Durch die im Betrieb auf das Ruder wirkenden Ruderkräfte kann es zu einer Abnutzung der Lagerbuchse kommen. Diese Abnutzung der Lagerbuchse führt dazu, dass der Ruderschaft im Kokerrohr beziehungsweise das Ruderblatt an dem Kokerrohr zusätzlich zu einer Rotation um die Achse des Ruderschaftes auch in einer radialen Richtung ausschlagen kann, was in der Folge zu Beschädigungen des Kokerrohrs, des Ruders, des Ruderschaftes oder der Ruderanlage führen kann.

Durch die Lagerspielmessvorrichtung mit einem Sensor zur abriebfreien Messung eines Lagerspiels kann rechtzeitig ermittelt werden, wenn ein Lagerspiel vorliegt, sodass dann Maßnahmen zur Verhinderung von Schäden ergriffen werden können. Beispielsweise kann das Lager oder die Lagerbuchse erneuert werden. Hinzu kommt, dass durch die Lagerspielmessung mittels eines Sensors zur abriebfreien Messung eines Lagerspiels auf manuelle, durch qualifizierte Taucher unter Wasser durchgeführte Messungen weitestgehend verzichtet werden kann. Da manuelle Messungen nicht zu jedem Zeitpunkt durchführbar sind, ermöglicht die Lagerspielmessung mittels eines Sensors zur abriebfreien Messung eines Lagerspiels eine kontinuierliche und daher besonders rechtzeitige Messung des Lagerspiels.

Bevorzugt ist vorgesehen, dass der mindestens eine Sensor zur abriebfreien Messung eines Lagerspiels ein Sensor zur abriebfreien Messung eines Abstandes zwischen dem Sensor und dem Ruderschaft und/oder zur abriebfreien Messung einer Wandstärke der Lagerbuchse ist.

Durch die Messung eines Abstandes zwischen dem Sensor und dem Ruderschaft und/oder der Messung einer Wandstärke der Lagerbuchse werden direkt diejenigen Messwerte von der Lagerspielmessvorrichtung ermittelt, die für eine Quantifizierung des Lagerspiels relevant sind. Im Gegensatz dazu wird im Stand der Technik das Lagerspiel über Hilfsmesswerte bestimmt. Ein bekannter Hilfsmesswert ist der Abrieb eines Sensors zur Lagerspielmessung, aus dem dann das Lagerspiel abgeleitet wird.

Durch die direkte Messung des Abstandes bzw. der Wandstärke wird Lagerspielmessung präziser und fehlerunanfälliger.

Erfindungsgemäß ist vorgesehen, dass der mindestens eine Sensor kontaktfrei und beabstandet zu dem Ruderschaft angeordnet ist.

Der mindestens eine Sensor ist somit nicht in physischem Kontakt mit dem im Kokerrohr drehbar geführten Ruderschaft angeordnet. Da kein physischer Kontakt zwischen dem Sensor und dem Ruderschaft vorliegt, unterliegt der Sensor auch keinem Abrieb. Der Sensor ist insbesondere in einem Abstand von mindestens 10 mm, bevorzugt in einem Abstand von mindestens 30 mm, weiter bevorzugt in einem Abstand von mindestens 40 mm, insbesondere bevorzugt in einem Abstand von mindestens 50 mm, von dem Ruderschaft angeordnet.

Lagerbuchsen für Ruder für Wasserfahrzeuge weisen üblicherweise eine Wandstärke zwischen 10 mm und 50 mm auf. Entsprechend besteht ein Vorteil einer von dem Ruderschaft beabstandeten Anordnung des Sensors darin, dass die Lagerbuchse zwischen dem Sensor und dem Ruderschaft angeordnet werden kann.

Bevorzugt ist vorgesehen, dass der Sensor auf einer Außenseite der Lagerbuchse angeordnet ist.

Der Sensor ist insbesondere bevorzugt in Kontakt mit der Außenseite der Lagerbuchse angeordnet. Die Lagerbuchse ist ferner mit besonderem Vorteil in oder an dem Kokerrohr feststehend angeordnet, das heißt, dass sich die Lagerbuchse nicht mit dem Ruderschaft beziehungsweise dem Ruder dreht. Bei der Anordnung des mindestens einen Sensors an der Außenseite der, insbesondere feststehenden, Lagerbuchse kann der Sensor in Kontakt mit der Lagerbuchse stehen, ohne dass es zu einem Abrieb des Sensors kommt.

Mit weiterem Vorteil kann vorgesehen sein, dass der mindestens eine Sensor in einer Axialrichtung des Ruderschaftes gesehen oberhalb oder unterhalb der Lagerbuchse angeordnet ist.

Ist der mindestens eine Sensor oberhalb oder unterhalb der Lagerbuchse angeordnet, so ist insbesondere eine vollständig kontaktfreie Messung des Lagerspiels möglich. Der Sensor steht insbesondere weder mit dem Ruderschaft noch mit der Lagerbuchse in Kontakt. Die kontaktfreie Messung schließt jedoch nicht aus, dass zwischen dem Sensor und der Lagerbuchse beziehungsweise zwischen dem Sensor und dem Ruderschaft Seewasser, Kontaktmittel oder Schmiermittel wie Fette angeordnet sind.

Besonders vorteilhaft ist es, wenn mindestens zwei, bevorzugt mindestens drei, besonders bevorzugt mindestens vier, Sensoren vorgesehen sind, wobei die Sensoren, insbesondere in regelmäßigen Winkelabständen, über einen Umfang des Kokerrohrs und/oder der Lagerbuchse angeordnet sind.

Durch die Anordnung von mehreren Sensoren kann eine präzisere Messung des Lagerspiels ermöglicht werden. Da die Abnutzung der Lagerbuchse in der Regel nicht gleichmäßig über den Umfang erfolgt, ist eine Messung an mindestens zwei, bevorzugt mindestens drei, insbesondere bevorzugt mindestens vier, Positionen über den Umfang der Lagerbuchse besonders vorteilhaft. Für diesen Zweck sind die Sensoren bevorzugt über den Umfang des Kokerrohrs angeordnet. Sind drei Sensoren vorgesehen, so beträgt der Winkelabstand zwischen den Sensoren bevorzugt 120°. Bei vier Sensoren beträgt der Winkelabstand bevorzugt 90°.

Insbesondere bevorzugt ist vorgesehen, dass die mindestens zwei, bevorzugt mindestens drei, besonders bevorzugt mindestens vier, Sensoren in der Axialrichtung des Ruderschaftes gesehen auf der gleichen Höhe angeordnet sind.

Mit weiterem Vorteil kann vorgesehen sein, dass der mindestens eine Sensor, insbesondere mindestens einer der Sensoren, in einem achterseitigen Bereich des, insbesondere feststehenden, Kokerrohrs angeordnet ist.

Das Kokerrohr ist üblicherweise fest mit dem Rumpf des Wasserfahrzeugs verbunden und nicht drehbar gelagert. Da bei einer normalen Vorwärtsfahrt des Wasserfahrzeuges die Ruderkräfte auf das Ruder besonders stark entgegen der Fahrtrichtung nach hinten in die Achternrichtung wirken, ist mit dem größten Abrieb der Lagerbuchse im achterseitigen Bereich der Lagerbuchse zu rechnen. Aus diesem Grund ist es besonders vorteilhaft, wenn mindestens einer der Sensoren im achterseitigen Bereich, insbesondere exakt achteraus, angeordnet ist. Sind weitere Sensoren vorgesehen, so sind bei beispielsweise vier Sensoren jeweils zwei Sensoren exakt querab, das heißt in 90° zur Längsachse des Wasserfahrzeugs angeordnet, während ein vierter Sensor exakt auf der Längsachse in Vorausrichtung beziehungsweise in Richtung Bug angeordnet ist.

Bevorzugt kann vorgesehen sein, dass der mindestens eine Sensor in einer Sensoraufnahme, insbesondere in einem Bohrloch, des Kokerrohrs angeordnet ist, und bevorzugt im oder mit dem Kokerrohr verschraubt ist.

Zur Anbringung des mindestens einen Sensors kann somit eine Sensoraufnahme an dem Kokerrohr vorgesehen sein. Die Sensoraufnahme kann beispielsweise ein nach der Fertigung des Kokerrohrs in das Kokerrohr gesetztes Bohrloch, bevorzugt mit einem Innengewinde, sein. Der mindestens eine Sensor wird dann zweckmäßig von der Außenseite des Kokerrohrs in die Sensoraufnahme eingeführt und dort befestigt. Zur Befestigung des Sensors kann dieser direkt in dem Bohrloch verschraubt werden. Es können jedoch auch weitere Befestigungsmittel wie Klebstoffe, Harze oder weitere Schraubverbindungen vorgesehen sein.

Erfindungsgemäß ist vorgesehen, dass der mindestens eine Sensor ein Wirbelstromsensor oder ein Ultraschallsensor ist.

Dabei ist es besonders bevorzugt, dass der Sensor ein Wirbelstromsensor ist.

Mit einem Wirbelstromsensor kann ein induktives Messen des Lagerspiels ermöglicht werden. Der von einem Wirbelstromsensor genutzte Effekt beruht auf einem Entzug von Energie aus einem Schwingkreis. Der Wirbelstromsensor weist daher bevorzugt eine Spule auf, welche mit Wechselstrom gespeist werden kann. Bei Speisung der Spule mit Wechselstrom bildet sich ein Magnetfeld in der Spule aus. In dem sich in der Nähe des Wirbelstromsensors befindenden, in der Regel aus einem Edelstahl gefertigten Ruderschaft entsteht dann gemäß dem faradayschen Induktionsgesetz ein Wirbelstrom, welcher wiederum ein Magnetfeld ausbildet. Dieses induzierte Magnetfeld wirkt dem Feld der Spule entgegen, was eine Änderung der Spulenimpedanz nach sich zieht. Die Impedanz lässt sich als Änderung der Amplitude und der Phasenlage der Spule des Sensors messen und als messbare Größe abgreifen. Aus der Veränderung der Amplitude und der Phasenlage lässt sich auf den Abstand des Wirbelstromsensors zu dem Ruderschaft schließen.

Insbesondere wenn der mindestens eine Sensor als Wirbelstromsensor ausgebildet ist, ist es von Vorteil, wenn der Sensor in einer Axialrichtung des Ruderschaftes gesehen oberhalb oder unterhalb der Lagerbuchse angeordnet ist. Dadurch wird ein kontaktfreies Messen des Abstandes von Sensor zu Ruderschaft ermöglicht. Vorteilhafterweise ist die Lagerbuchse nicht zwischen dem Wirbelstromsensor und dem Ruderschaft angeordnet, sodass das Material der Lagerbuchse die Abstandsmessung nicht nachteilig beeinflussen kann.

Bevorzugt ist der Wirbelstromsensor in einem Mindestabstand von mindestens 5 mm, weiter bevorzugt von mindestens 10 mm, ganz besonders bevorzugt von mindestens 20 mm, oberhalb oder unterhalb der Lagerbuchse angeordnet.

Gegebenenfalls sich zwischen dem Wirbelstromsensor und dem Ruderschaft befindende Materialien wie Wasser, Luft, Schmiermittel, insbesondere Fette, beeinflussen die Abstandsmessung nicht nachteilig.

Die Messung des Abstandes zwischen dem Ruderschaft und dem Sensor, insbesondere dem Wirbelstromsensor, ist eine abriebfrei und kontaktfreie Messung des Lagerspiels.

Alternativ oder zusätzlich kann mindestens einer der Sensoren auch als Ultraschallsensor ausgebildet sein. Der Ultraschallsensor ist bevorzugt in direktem Kontakt mit der, weiter bevorzugt feststehenden, Lagerbuchse angeordnet. Durch Aussenden und Empfangen von Ultraschallwellen kann direkt die Wandstärke der Lagerbuchse im Bereich des Ultraschallsensors ermittelt werden. Grundsätzlich ist auch mit einem Ultraschallsensor eine kontaktfreie Messung möglich. Der Ultraschallsensor steht dabei bei der kontaktfreien Messung nicht im direkten physischen Kontakt mit der Lagerbuchse und/oder mit dem Ruderschaft. Auch kann der Ultraschallsensor oberhalb oder unterhalb der Lagerbuchse am Kokerrohr angeordnet sein, sodass mittels der vom Ultraschallsensor ausgesendeten und empfangenen Ultraschallwellen der Abstand zu dem Ruderschaft ermittelt wird. Die Ultraschallwellen werden dafür am Ruderschaft reflektiert.

Eine kontaktfreie Messung mit Ultraschallsensoren ist insbesondere dann bevorzugt, wenn die Wandstärke der Lagerbuchse bestimmt werden soll, die Lagerbuchse jedoch nicht an dem Kokerrohr sondern an dem Ruderschaft befestigt ist und sich somit in dem Kokerrohr mit dem Ruderschaft dreht.

Ferner bevorzugt ist vorgesehen, dass ein Ultraschall-Kontaktmittel, insbesondere auf Silikonbasis, zwischen dem Ultraschallsensor und der Lagerbuchse und/oder dem Ruderschaft angeordnet ist.

Durch das Vorsehen eines Kontaktmittels wird die Messung durch den Ultraschallsensor verbessert.

Ferner kann im Falle einer nicht feststehenden Lagerbuchse, das heißt einer Lagerbuchse, welche sich mit dem Ruderschaft mit dreht, durch das zwischen dem Ultraschallsensor und der Lagerbuchse angeordnete Kontaktmittel ein direkter physischer Kontakt zwischen dem Ultraschallsensor und der Lagerbuchse und/oder dem Ruderschaft vermieden werden, sodass weiterhin eine abriebfreie Messung des Abstands zwischen Sensor und Ruderschaft beziehungsweise der Wandstärke der Lagerbuchse möglich ist.

Mit weiterem Vorteil kann vorgesehen sein, dass der mindestens eine Sensor an einem Halter angeordnet ist, wobei der Halter an dem Kokerrohr, insbesondere an einer Stirnseite des Kokerrohrs, befestigt ist.

Durch die Befestigung des mindestens einen Sensors an einem Halter wird eine Nachrüstlösung für bestehende Ruder bereitgestellt. So kann ein bereits bestehendes Ruder mit einem den mindestens einen Sensor aufweisenden Halter nachgerüstet werden, um auch bei dem bestehenden Rudern eine abriebfreie Messung des Lagerspiels zu ermöglichen.

Bevorzugt ist der Halter ein gefrästes Bauteil.

Der Halter kann somit mit aus dem Stand der Technik bekannten Mitteln und Verfahren hergestellt werden und ist insbesondere kostengünstig produzierbar. Der Halter kann entweder in das Innere des Kokerrohrs eingeführt und dort befestigt werden, beispielsweise oberhalb oder unterhalb der Lagerbuchse. Jedoch ist es auch möglich, dass der Halter auf eine Stirnseite des aus dem Rumpf des Wasserfahrzeugs ragenden unteren Endes des Kokerrohrs aufgesetzt wird, so dass der an dem Halter befestigte Sensor den Abstand von dem aus dem Kokerrohr herausragenden Bereich des Ruderschaftes zu dem Sensor misst.

Bevorzugt ist der Halter ringförmig ausgebildet.

Mit weiterem Vorteil kann vorgesehen sein, dass der Halter mindestens ein Ringsegment umfasst. Das mindestens eine Ringsegment deckt bevorzugt einen Winkelbereich von mindestens 90°, weiter bevorzugt von mindestens 120°, noch weiter bevorzugt von mindestens 180°, ganz besonders von 360°, ab. Mit anderen Worten ist das mindestens eine Ringsegment beispielsweise ein Viertelring, ein Drittelring, ein Halbring oder ein Vollring. Ferner kann der Halter mehr als ein Ringsegment umfassen. Sind die mehreren Ringsegmente in einer Ebene angeordnet, so ist bevorzugt vorgesehen, dass die mehreren Ringsegmente zusammen höchstens einen Winkelbereich von 360° abdecken. Beispielsweise umfasst der Halter zwei als Viertelringe ausgebildete Ringsegmente.

Bevorzugt deckt ein als Viertelring ausgebildetes Ringsegment etwas mehr als 90°, beispielsweise ca. 95° oder 100°, ab. Hierdurch kann erreicht werden, dass an einem als Viertelring ausgebildeten Ringsegment zwei Sensoren in einem Winkelabstand von 90° angeordnet werden können. Umfasst der Halter zwei solcher als Viertelring ausgebildete Ringsegmente, so können diese derart oberhalb oder unterhalb der Lagerbuchse angeordnet werden, dass insgesamt vier Sensoren in regelmäßigen Winkelabständen von 90° um den Ruderschaft herum angeordnet sind.

Ein Halter umfassend zwei als Viertelringe ausgebildete Ringsegmente ist besonders für eine Nachrüstlösung für bestehende Ruder geeignet. Jedoch kann ein Halter für eine Nachrüstlösung auch nur einen Viertelring oder eine Vollring umfassen.

Ein Halter umfassend mindestens ein Ringsegment, welches nicht als Vollring ausgebildet ist, ist auch im Hinblick auf eine Wartung vorteilhaft. Bei einem defekten Sensor muss in diesem Fall nur das Ringsegment ausgetauscht werden, welches den defekten Sensor aufweist. Ferner kann bevorzugt vorgesehen sein, dass der Halter nur ein Ringsegment, beispielsweise ein als Viertelring ausgebildetes Ringsegment, umfasst. Ein solcher Halter ist insbesondere dann vorteilhaft, wenn die abriebfreie Messung des Lagerspiels nur an einer Seite oder einem Bereich des Lagers erfolgen soll. Beispielsweise kann vorgesehen sein, dass die abriebfreie Messung des Lagerspiels nur in einem achterseitigen Bereich des Lagers durchgeführt werden soll.

Die abriebfreie Messung des Lagerspiels kann auch an zwei oder drei Seiten und/oder Bereichen des Lagers erfolgen. Entsprechend kann eine geeignete Anzahl und/oder Kombination von Ringsegmenten für den Halter gewählt werden.

Bevorzugt ist der Halter, insbesondere mindestens ein Ringsegment des Halters, zweiteilig umfassend einen Grundkörper und einen Deckel ausgebildet, wobei in dem Halter ein Innenraum ausgebildet ist, in dem der mindestens eine Sensor angeordnet ist. Bevorzugt ist zwischen Grundkörper und Deckel eine Dichtung, beispielsweise eine Dichtschnur angeordnet. Ferner bevorzugt sind der Grundkörper und der Deckel miteinander verschraubt.

Ein zweiteilig ausgebildeter Halter ist insbesondere für eine Nachrüstlösung für bestehende Ruder von Vorteil. Ruderkoker bestehender Ruder weisen an der unteren Stirnseite meist keine plane Fläche auf, weswegen dort keine Dichtung angebracht werden kann. Durch die zweiteilige Ausgestaltung des Halters mit einem Grundkörper und einem Deckel, wobei der mindestens eine Sensor in dem Innenraum des Halters angeordnet ist, kann der Sensor geschützt werden.

Grundsätzlich kann der Ruderkoker auch eine plane untere Stirnseite aufweisen, so dass dort eine Dichtung angebracht werden kann. In diesem Fall kann der Grundkörper gegen die untere Stirnseite des Kokerrohrs verschraubt werden, so dass der Ruderkoker, bzw. das Kokerrohr, gewissermaßen den Deckel des Halters bildet.

Weiter bevorzugt ist ein Sensorkabel vorgesehen, welches ausgebildet ist, Signale beziehungsweise Daten von dem mindestens einen Sensor zu leiten. Das Sensorkabel kann insbesondere über einen Signalanschluss mit einem Signalleitmittel verbunden sein, um Signale beziehungsweise Daten des Sensors an eine Auswerteeinheit zu senden.

Das Sensorkabel ist bevorzugt im Innenraum des zweiteilig ausgebildeten Halters angeordnet. Die Anordnung des Sensorkabels im Innenraum des zweiteilig ausgebildeten Halters dient dem Schutz des Sensorkabels.

Bevorzugt kann ferner vorgesehen sein, dass der Innenraum mit einem Fett ausgefüllt ist, wobei das Fett insbesondere die Sensorkabel umschließt. Die Anordnung von Fett in dem Innenraum dient dem Schutz der Sensorkabel vor Vibrationen.

Bevorzugt kann vorgesehen sein, dass pro Ringsegment zwei, drei oder mehr Sensoren vorgesehen sind.

Das Ringsegment kann bevorzugt auch in etwa U-förmig ausgestaltet sein.

Bevorzugt kann vorgesehen sein, dass ein Signalleitmittel, insbesondere ein Kabel, vorgesehen ist, wobei das Signalleitmittel bevorzugt auf einer Außenseite des Kokerrohrs verlaufend angeordnet ist.

Insbesondere bevorzugt sind die Signalleitmittel mit dem Signalanschluss des Halters elektrisch verbunden.

Das Signalleitmittel, insbesondere das Kabel, dient dazu, Signale bzw. Daten von dem mindestens einen Sensor an eine Auswerteeinheit, welche insbesondere bevorzugt im Inneren des Wasserfahrzeugs, beispielsweise auf der Schiffsbrücke, angeordnet ist, zu übertragen. Grundsätzlich ist es auch möglich, dass eine kabel- oder drahtlose Übertragung von Daten vorgesehen ist, wobei in diesem Fall die Signalleitmittel einen Sender und/oder einen Empfänger für Funksignale umfasst. Ferner ist in einem solchen Fall der mindestens eine Sensor mit einer Energiequelle wie beispielsweise einer Batterie zu versehen.

Bevorzugt ist jedoch vorgesehen, dass die Signalübertragung über ein Signalleitmittel wie ein Kabel erfolgt.

Dadurch, dass die Signalleitmittel auf einer Außenseite des Kokerrohrs verlaufend angeordnet sind, ist deren Befestigung oder Anbringung an dem Kokerrohr besonders einfach zu realisieren.

Mit weiterem Vorteil kann vorgesehen sein, dass das Signalleitmittel, zumindest abschnittsweise, in einem Signalleitmittelkanal angeordnet ist, wobei der Signalleitmittelkanal auf der Außenseite des Kokerrohrs angeordnet ist.

Der Signalleitmittelkanal ist dabei bevorzugt ebenfalls nur abschnittsweise auf der Außenseite des Kokerrohrs angeordnet.

Insbesondere ist der Signalleitmittelkanal nur in dem Bereich eines unteren Endes des Kokerrohrs angeordnet, welches aus dem Rumpf des Wasserfahrzeuges, insbesondere aus einem Skeg des Wasserfahrzeuges, herausragt und weiter insbesondere in das Ruderblatt des Ruders hineinragt.

Ferner kann bevorzugt vorgesehen sein, dass der Signalleitmittelkanal eine Nut, ein U-Profil oder ein Kabelkanal ist.

Ein als U-Profil ausgebildeter Signalleitmittelkanal kann offen zum Kokerrohr hin ausgebildet sein und mit den Enden der U-Schenkel des U-Profils an dem Kokerrohr angeschweißt sein, sodass das U-Profil zusammen mit der Außenseite des Kokerrohrs einen Signalleitmittelkanal bildet.

Ferner kann der Signalleitmittelkanal als eine in die Außenseite des Kokerrohrs eingearbeitete und gegebenenfalls abgedeckte Nut ausgebildet sein, oder es kann ein vollständig geschlossener Kabelkanal auf der Außenseite des Kokerrohrs angebracht werden.

Mit weiterem Vorteil ist das Signalleitmittel in dem Signalleitmittelkanal in einem Isoliermittel, insbesondere in einem Fett, eingebettet.

Durch die Einbettung des Signalleitmittels, insbesondere des Kabels, in einem Isoliermittel wie einem Fett kann das Signalleitmittel, insbesondere das Kabel, vor Vibrationen und Umwelteinflüssen geschützt werden.

Eine weitere Lösung der der Erfindung zugrundeliegenden Aufgabe besteht in der Bereitstellung eines Verfahrens zur Messung eines Lagerspiels in einem vorbeschriebenen Ruder, wobei eine abriebfreie Messung des Lagerspiels erfolgt, wobei die abriebfreie Messung eine kontaktfreie Messung ist, und/oder wobei die abriebfreie Messung eine Ultraschallmessung unter Verwendung eines Ultraschallsensors oder eine Wirbelstrommessung unter Verwendung eines Wirbelstromsensors ist.

Insbesondere sind sämtliche mit dem vorbeschriebenen Ruder erzielten Vorteile in entsprechender Ausgestaltung für das Verfahren erhältlich und die Merkmale des vorbeschriebenen Ruders, insbesondere der Lagerspielmessvorrichtung, können in entsprechender Weise auf das Verfahren übertragen werden.

Bevorzugt ist die abriebfreie Messung des Lagerspiels eine abriebfreie Messung eines Abstandes zwischen einem Sensor und einem Ruderschaft und/oder eine abriebfreie Messung einer Wandstärke einer Lagerbuchse.

Liegt der gemessene Abstand oder die gemessene Wandstärke außerhalb vorbestimmter Toleranzwerte, das heißt wenn der gemessene Abstand oder die gemessene Wandstärke zu groß oder zu klein ist, so kann eine entsprechende Information auf einer Auswerteeinheit angezeigt werden. Es kann dann ein Wechsel des Lagers oder der Lagerbuchse erfolgen.

Zudem kann vorgesehen sein, dass die Messung automatisch, insbesondere in regelmäßigen Zeitintervallen, erfolgt.

Durch die, insbesondere in regelmäßigen Zeitintervallen erfolgende, automatisch durchgeführte Messung kann eine kontinuierliche Überwachung des Lagerspiels eines Ruders bereitgestellt werden. Insbesondere ist es nicht mehr nötig, das Lagerspiel durch eine in der Regel in großen zeitlichen Abständen erfolgende und kostenintensive manuelle Messung durch qualifizierte Taucher unter der Wasseroberfläche zu bestimmen.

Bevorzugt kann vorgesehen sein, dass die Messung an mindestens zwei, bevorzugt an mindestens drei, besonders bevorzugt an mindestens vier Stellen, über einen Umfang einer Lagerbuchse und/oder eines Ruderschaftes und/oder eines Kokerrohrs erfolgt.

Eine noch weitere Lösung der der Erfindung zugrundeliegenden Aufgabe besteht in der Bereitstellung eines Systems bestehend aus einem Ruderkokerrohr und einer Lagerspielmessvorrichtung für ein vorbeschriebenes Ruder, wobei die Lagerspielmessvorrichtung mindestens einen Sensor zur abriebfreien Messung eines Lagerspiels umfasst, wobei der mindestens eine Sensor kontaktfrei und beabstandet zu einem Ruderschaft eines Ruders anordbar ist. Der mindestens eine Sensor zur abriebfreien Messung eines Lagerspiels ist ein Sensor zur abriebfreien Messung eines Abstands zwischen dem Sensor und einem Ruderschaft und/oder zur abriebfreien Messung einer Wandstärke einer Lagerbuchse. Der mindestens eine Sensor ist ferner in einer Sensoraufnahme des Ruderkokerrohrs oder an einem Halter, der an dem Ruderkokerrohr befestigt ist, angeordnet. Bevorzugt kann der mindestens eine Sensor ein Wirbelstromsensor oder ein Ultraschallsensor sein.

Die im Zusammenhang mit dem vorbeschriebenen Ruder und Verfahren erläuterten Merkmale können in entsprechender Weise auch auf das erfindungsgemäße System übertragen werden.

.Eine noch weitere Lösung der der Erfindung zugrundeliegenden Aufgabe besteht in der Verwendung eines Wirbelstromsensors oder eines Ultraschallsensors in einem vorbeschriebenen Ruder.

### Kurze Beschreibung der Figuren

Die vorliegende Erfindung wird näher anhand der beigefügten Figuren erläutert.

Es zeigen:
- Fig. 1: ein Ruder an einem Wasserfahrzeug,
- Fig. 2: ein Kokerrohr eines Ruders mit einem Ruderschaft und einer Lagerspielmessvorrichtung,
- Fig. 3: ein Kokerrohr mit einer Lagerspielmessvorrichtung mit einem Wirbelstromsensor,
- Fig. 4: ein Kokerrohr mit einer Lagerspielmessvorrichtung mit einem Ultraschallsensor,
- Fig. 5: ein Kokerrohr mit einer Anordnung von vier Sensoren einer Lagerspielmessvorrichtu ng,
- Fig. 6: ein Kokerrohr mit einer Anordnung von drei Sensoren einer Lagerspielmessvorrichtu ng,
- Fig. 7: eine Lagerspielmessvorrichtung an einer Stirnseite eines Kokerrohrs,
- Fig. 8: einen Halter mit Sensoren einer Lagerspielmessvorrichtung,
- Fig. 9: einen Halter mit Ringsegmenten an einer Stirnseite eines Kokerrohrs,
- Fig. 10: ein Ringsegment eines Halters,
- Fig. 11: einen Halter mit Ringsegmenten,
- Fig 12a: eine Seitenansicht eines Halters mit Ringsegmenten an einer Stirnseite eines Kokerrohrs,
- Fig. 12b: eine Detailansicht eines Halters mit Ringsegmenten an einer Stirnseite eines Kokerrohrs, und
- Fig. 13: einen U-förmigen Halter.

### Ausführliche Beschreibung der Figuren

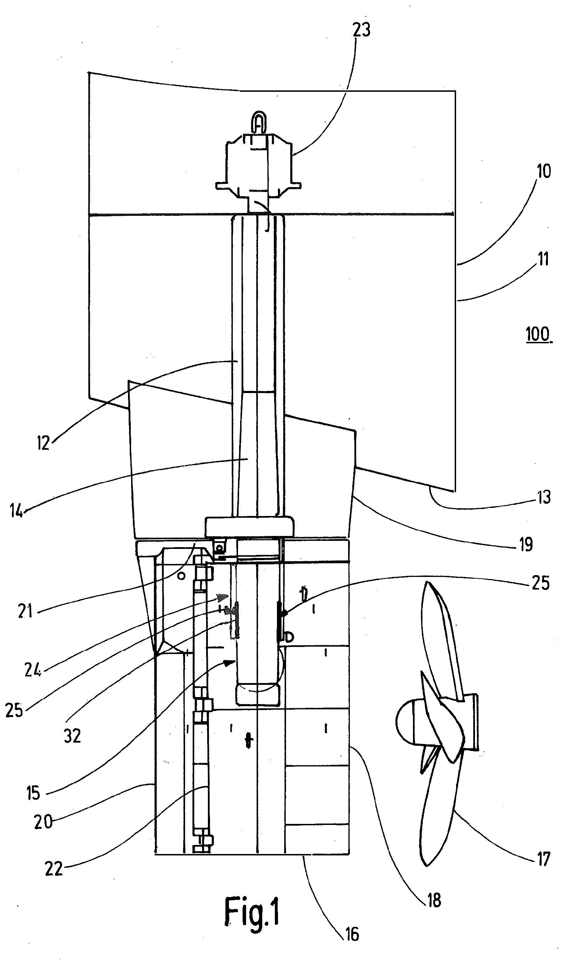

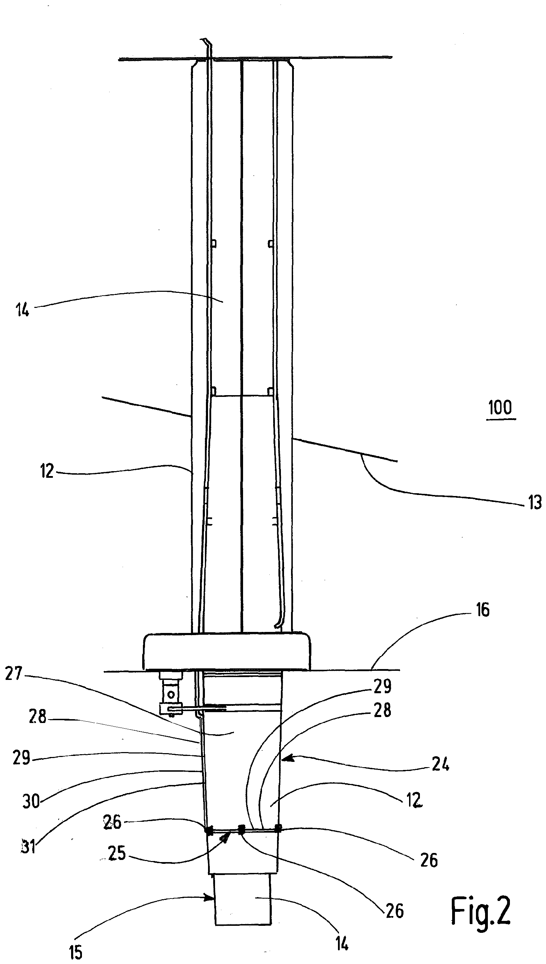

Fig. 1 zeigt ein Ruder 100 an einem in der Fig. 1 nur ausschnittsweise gezeigten Wasserfahrzeug 10. Das Wasserfahrzeug 10 ist als Schiff 11 ausgebildet. Das Ruder 100 umfasst ein Kokerrohr 12, welches in dem Schiffsrumpf 13 des Schiffes 11 feststehend befestigt ist. In dem Kokerrohr 12 ist ein Ruderschaft 14 drehbar angeordnet. An einem unteren Ende 15 des Ruderschaftes 14 ist ein Ruderblatt 16 des Ruders 100 befestigt. Das Ruderblatt 16 ist hinter einem Propeller 17 des Schiffes 11 angeordnet. Die Anströmkante 18 des Ruderblatts 16 ist dem Propeller 17 zugewandt. Ferner ist am Schiffsrumpf 13 ein Skeg 19 angeordnet, durch den das Kokerrohr 12 und der Ruderschaft 14 geführt sind. Das untere Ende 15 des Ruderschaftes 14 ragt in das Ruderblatt 16 hinein. Das Ruderblatt 16 weist ferner eine angelenkte Flosse 20 auf, welche mittels einer Anlenkeinrichtung 21 verschwenkbar an einer Endleiste 22 des Ruderblattes 16 angeordnet ist. Das Ruderblatt 16 und der Ruderschaft 14 sind im Schiffsrumpf 13 mit einer Ruderanlage 23 verbunden, mittels welcher der Ruderschaft 14 und das mit dem Ruderschaft 14 verbundene Ruderblatt 16 verschwenkt werden können. Das Kokerrohr 12 ist ebenfalls mit einem unteren Ende 24 in das Ruderblatt 16 hineingeführt. Im unteren Ende 24 des Kokerrohrs 12 ist eine Lagerbuchse 32 angeordnet, an der der Ruderschaft 14 gelagert ist. Ferner weist das Ruder 100 eine in den Fig. 2 bis 8 näher gezeigte Lagerspielmessvorrichtung 25 auf.

Fig. 2 zeigt das Kokerrohr 12, den im Kokerrohr 12 angeordneten Ruderschaft 14 sowie das untere Ende 24 des Kokerrohrs, welcher ins Ruderblatt 16 eingeführt ist. Aus dem unteren Ende 24 des Kokerrohrs 12 ragt der Ruderschaft 14 beziehungsweise ein unteres Ende 15 des Ruderschaftes 14 heraus. Die Lagerspielmessvorrichtung 25 weist Sensoren 26 zur abriebfreien Messung eines Lagerspiels auf, welche über einen Umfang des unteren Endes 24 des Kokerrohrs 12 angeordnet sind. Die Sensoren 26 sind zur Datenübertragung über Signalleitmittel 28 mit einer nicht näher gezeigten und im Schiffsrumpf 13 angeordneten Auswerteeinheit verbunden. Dabei sind die Signalleitmittel 28 als Kabel 29 ausgebildet, welche auf einer Außenseite 27 des Kokerrohrs 12 verlaufend angeordnet sind. Am unteren Ende 24 des Kokerrohrs 12 ist ein Signalleitmittelkanal 30 angeordnet, in welchem das Kabel 29 zumindest bereichsweise verläuft. Der Signalleitmittelkanal 30 ist als ein auf die Außenseite 27 des Kokerrohrs 12 aufgeschweißtes und mit einem Fett gefülltes U-Profil 31 ausgebildet. Das im U-Profil 31 verlaufende Kabel 29 wird durch das Fett vor Vibrationen und Außen- und Umwelteinflüssen geschützt.

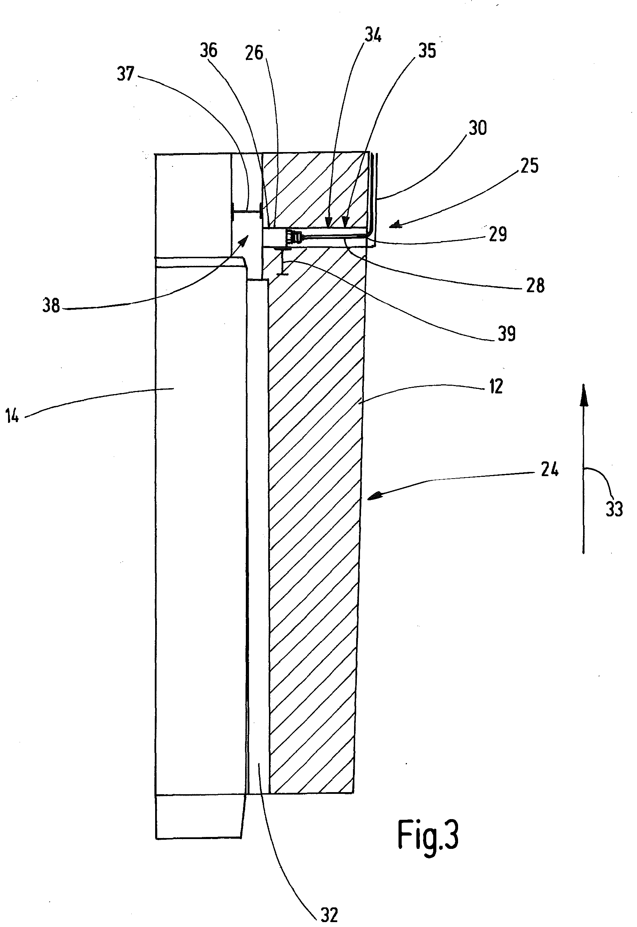

Fig. 3 zeigt eine Querschnittsansicht des unteren Endes 24 des Kokerrohrs 12. Der Ruderschaft 14 des Ruders 100 ist in dem Kokerrohr 12 mittels einer an dem Kokerrohr 12 fest fixierten Lagerbuchse 32 drehbar gelagert. In einer Axialrichtung 33 des Ruderschafts 14 gesehen ist der mindestens eine Sensor 26 oberhalb der Lagerbuchse 32 angeordnet. Der mindestens eine Sensor 26 ist über die als Kabel 29 ausgebildeten Signalleitmittel 28 mit der Auswerteeinheit verbunden. Der Sensor 26 ist in einer Sensoraufnahme 34, welche als Bohrloch 35 ausgebildet ist, angeordnet und in der Sensoraufnahme 34 verschraubt. Der Sensor 26 ist als Wirbelstromsensor 36 ausgebildet und weist somit eine nicht näher dargestellte Spule auf. Durch Beaufschlagung der Spule mit einem Wechselstrom wird ein Magnetfeld erzeugt, welches in dem dem Wirbelstromsensor 36 gegenüberliegenden ausgebildeten Ruderschaft 14 einen Wirbelstrom induziert, durch welchen wiederum ein Magnetfeld induziert wird. Das induzierte Magnetfeld wirkt auf die Spule des Wirbelstromsensors 36 zurück und ändert die Impedanz der Spule, welche sich als Änderung der Amplitude und der Phasenlage der Spule des Wirbelstromsensors 36 messen und als messbare Größe abgreifen lässt. Aus der Änderung der Phasenlage oder Amplitude der Spule kann auf den Abstand 37 des Wirbelstromsensors 36 von dem Ruderschaft 14 geschlossen werden. In dem Spalt 38 zwischen Ruderschaft 14 und Kokerrohr 12 kann sich Meerwasser oder auch Schmiermittel wie Fette befinden. Da sich die Lagerbuchse 32 nicht zwischen dem Wirbelstromsensor 36 und dem Ruderschaft 14 befindet, ist der Wirbelstromsensor 36 kontaktfrei und beabstandet zu dem Ruderschaft 14 angeordnet. In der Axialrichtung 33 gesehen ist der Wirbelstromsensor 36 mit einem Mindestabstand 39 oberhalb der Lagerbuchse 32 angeordnet, sodass das Material der Lagerbuchse 32 die Wirbelstrommessung des Wirbelstromsensors 36 nicht verfälscht. Das als Kabel 19 ausgebildete Signalleitmittel ist in dem Signalleitmittelkanal 30 geführt.

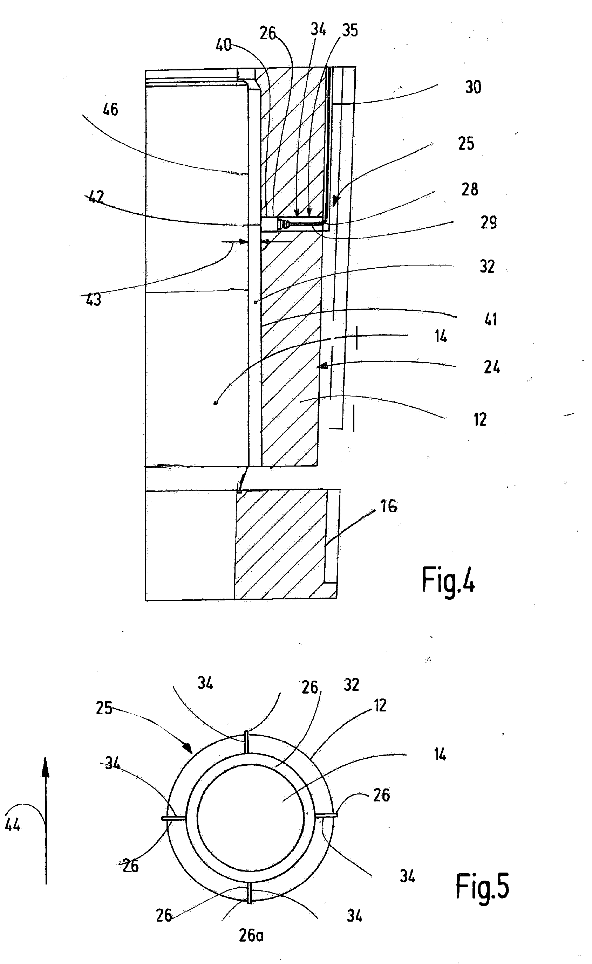

Fig. 4 zeigt eine weitere Ausführungsform einer Lagerspielmessvorrichtung 25 für ein Ruder 100. Die Lagerspielmessvorrichtung 25 der Fig. 4 umfasst ebenfalls einen Sensor 26, welcher in einer Sensoraufnahme 34 des Kokerrohrs 12 angeordnet ist. Im Gegensatz zu dem Sensor 26 der Fig. 3 ist der Sensor 26 der Fig. 4 als Ultraschallsensor 40 ausgebildet und in einem direkten physischen Kontakt auf einer Außenseite 41 der Lagerbuchse 32 angeordnet. Zwischen der insbesondere feststehend in dem Kokerrohr 12 angeordneten Lagerbuchse 32 und dem Ultraschallsensor 40 ist ein Ultraschall-Kontaktmittel 42 auf Silikonbasis angeordnet. Der Ultraschallsensor 42 sendet Ultraschallwellen aus, welche durch das Material der Lagerbuchse 32 verlaufen und von der Grenzfläche 46 zwischen Lagerbuchse 32 und Ruderschaft 14 reflektiert werden. Aus der Laufzeit der Ultraschallwellen kann auf die Wandstärke 43 der Lagerbuchse 32 geschlossen werden. Darüber hinaus ist die Lagerspielmessvorrichtung 25 der Fig. 4 identisch zur Lagerspielmessvorrichtung 25 der Fig. 3 aufgebaut.

Fig. 5 zeigt einen Querschnitt durch das Kokerrohr 12 der Fig. 4 auf der Höhe der Lagerspielmessvorrichtung 25. In dem Kokerrohr 12 sind vier Sensoren 26 in gleichmäßigen Winkelabständen über den Umfang des Kokerrohrs 12 angeordnet. Der Ruderschaft 14 ist über eine Lagerbuchse 32 in dem Kokerrohr 21 gelagert. Ein Sensor 26a der Sensoren 26 ist entgegen der Fahrtrichtung 44 des Wasserfahrzeugs 10 exakt achteraus an dem Kokerrohr 12 angeordnet. Die Winkelabstände der Sensoren 26 betragen zueinander jeweils 90°.

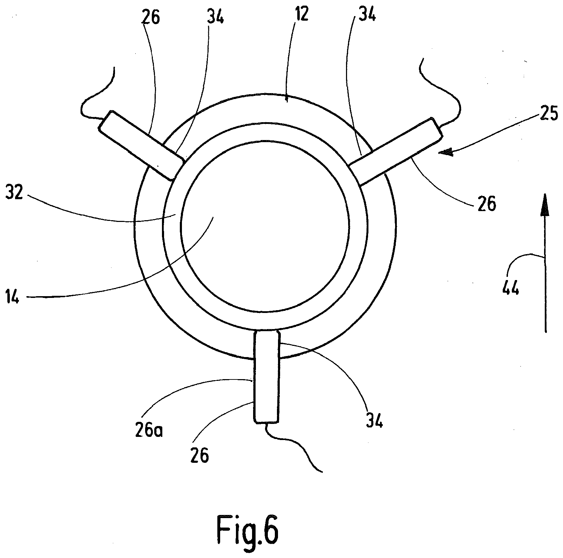

Fig. 6 zeigt eine alternative Anordnung der Sensoren 26, 26a der Lagerspielmessvorrichtung 25. Gegenüber der Fig. 5 sind drei Sensoren 26 vorgesehen, welche in Sensoraufnahmen 34 angeordnet sind. Die drei Sensoren 26, 26a sind in gleichmäßigen Winkelabständen über den Umfang des Kokerrohrs 12 angeordnet. Die Winkelabstände zwischen den einzelnen Sensoren 26, 26a betragen 120°. Auch bei der Ausgestaltung nach Fig. 6 ist ein Sensor 26a exakt entgegen der Fahrtrichtung 44 achteraus am Kokerrohr 12 befestigt.

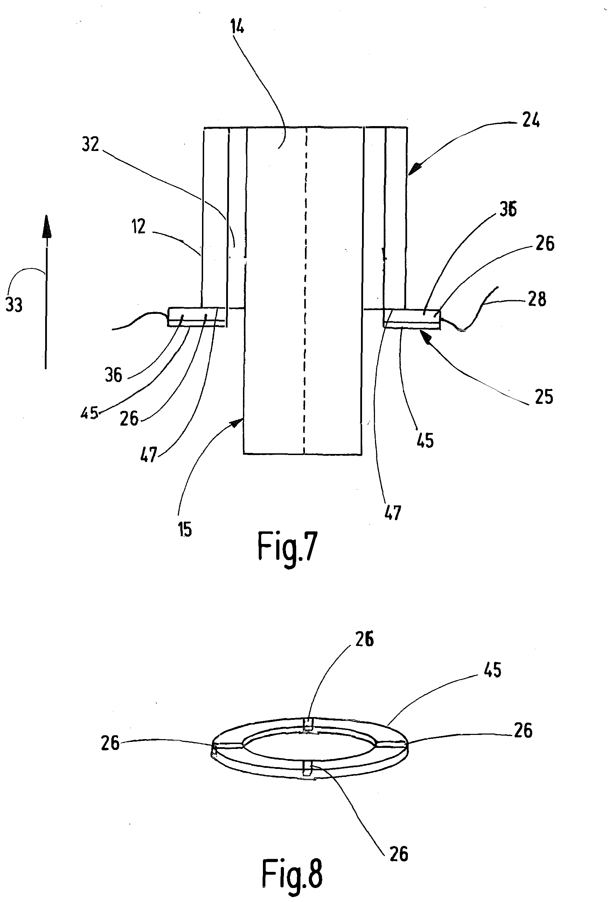

Fig. 7 zeigt eine weitere Ausgestaltung der Lagerspielmessvorrichtung 25 mit Wirbelstromsensoren 36. Die Wirbelstromsensoren 36 sind an einem ringförmigen Halter 45 angeordnet. Der ringförmige Halter 45 ist auf einer Stirnseite 47 des unteren Endes 24 des Kokerrohrs 12 angeordnet. Somit befinden sich die Wirbelstromsensoren 36 in der Axialrichtung 33 des Ruderschaftes 14 gesehen unterhalb der Lagerbuchse 32. Darüber hinaus ist die Ausgestaltung nach Fig. 7 analog zu der Ausgestaltung nach Fig. 3.

Fig. 8 zeigt schließlich eine perspektivische Ansicht des ringförmigen Halters 45 mit vier daran in regelmäßigen Winkelabständen angeordneten Sensoren 26.

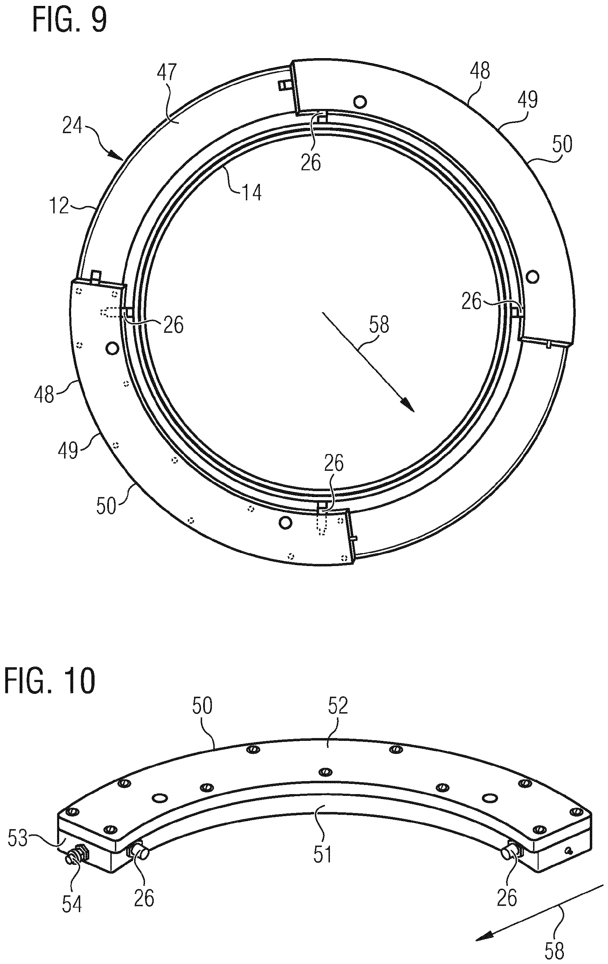

Fig. 9 zeigt in einer Aufsicht auf die Stirnseite 47 des unteren Endes 24 des Kokerrohrs 12 einen weiteren Halter 48, welcher an der Stirnseite 47 des Kokerrohrs 12 angeordnet ist. Der Halter 48 umfasst zwei als Viertelringe 49 ausgebildete Ringsegmente 50. Jedes der Ringsegmente 50 deckt einen Winkelbereich von etwas mehr als 90° ab. Jedes Ringsegment 50 weist zwei Sensoren 26 auf, welche als Wirbelstromsensoren 36 ausgebildet sein können. Die Sensoren 26 jedes Ringsegments 50 sind in einem Winkelabstand von 90° zueinander angeordnet. Die in Fig. 9 gezeigte Ausgestaltung mit zwei als Viertelringe 49 ausgebildeten Ringsegmenten 50 ist insbesondere als Nachrüstlösung für ein bestehendes Ruder 100 mit bestehenden Ruderschäften 14 geeignet.

Ein einzelnes Ringsegment 50 aus Fig. 9 ist in Fig. 10 gezeigt. Das Ringsegment 50 ist zweiteilig ausgebildet und weist einen Grundkörper 51 und einen Deckel 52 auf. Der Deckel 52 ist mit dem Grundkörper 51 verschraubt. In einem Winkelabstand von etwa 90° ragen in einer Radialrichtung 58 nach innen zwei Sensoren 26 zur abriebfreien Messung eines Lagerspiels aus dem Ringsegment 50 heraus. An einer der Stirnseiten 53 des Ringsegments 50 ist ein Signalanschluss 54 vorgesehen, über welchen die Signale und Daten der beiden Sensoren 26 aus dem Ringsegment 50 herausgeführt werden können. An den Signalanschluss 54 können Signalleitmittel 28 (Fig. 2) angeschlossen werden, mit welchen die Signale und Daten der Sensoren 26 zu einer Auswerteeinheit geleitet werden können.

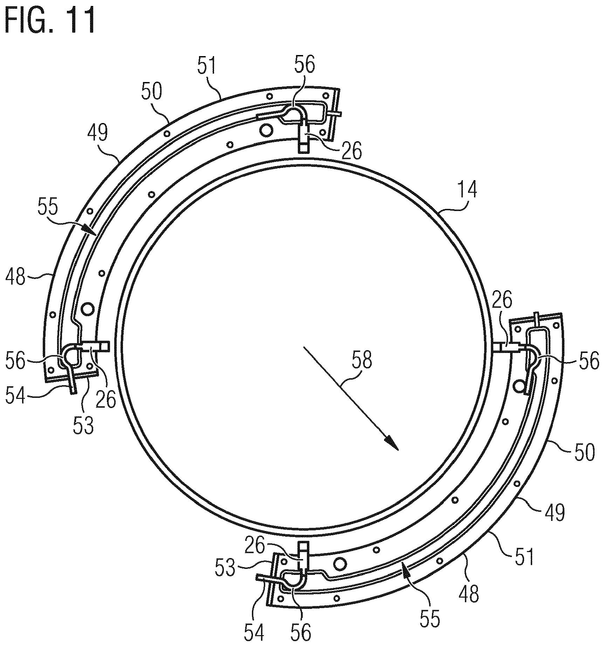

Fig. 11 zeigt in einer Aufsicht den Halter 48 mit den zwei Ringsegmenten 50 nach Fig. 9, jedoch ohne das Kokerrohr 12. Beide Ringsegmente 50 weisen gemäß Fig. 10 einen Grundkörper 51 auf. Gezeigt sind die Ringsegmente 50 ohne den jeweiligen Deckel 52. Jedes der Ringsegmente 50 weist einen Innenraum 55 auf, in dem die Sensoren 26 zumindest teilweise angeordnet sind. Jeder der Sensoren 26 ist mit einem Sensorkabei 56 verbunden, welches die Signale und Daten der Sensoren 26 zu dem Signalanschluss 54 auf der Stirnseite 53 des jeweiligen Ringsegments 50 führt. Der Innenraum 55 der Ringsegmente 50 ist mit Fett ausgefüllt, um die Sensorkabel 56 vor Vibrationen zu schützen.

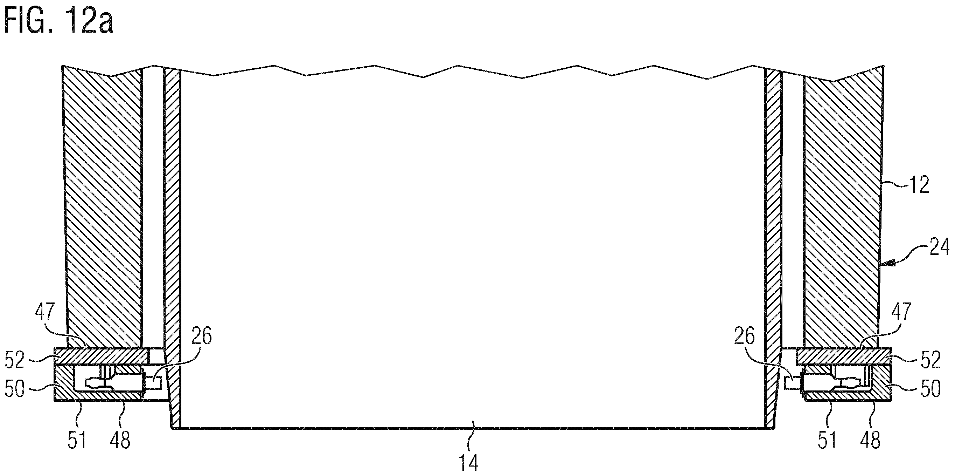

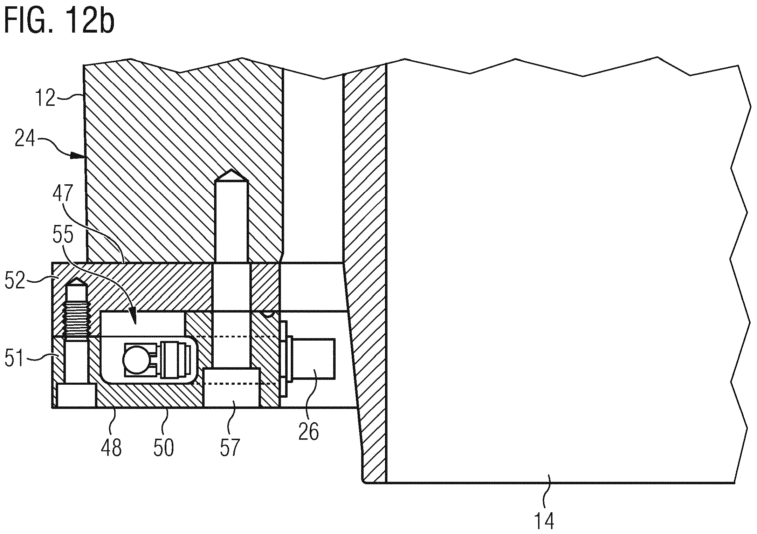

Fig. 12a und 12b zeigen eine Seitenansicht des unteren Endes 24 des Kokerrohrs 12 ähnlich der Figur 7. Figur 12b ist eine Detailansicht der Fig. 12a. Die Ringsegmente 50 des Halters 48 sind an der Stirnseite 47 des unteren Endes 24 des Kokerrohrs 12 angeordnet. Die Sensoren 26 ragen zur abriebfreien Messung des Lagerspiels aus dem Innenraum 55 des jeweiligen Ringsegments 50 hervor. Wie insbesondere in Fig. 12b gezeigt, sind die Ringsegmente 50 mittels Verbindungsschrauben 57 an der Stirnseite 47 des Kokerrohres 12 angeschraubt. Jedes Ringsegment 50 weist einen Grundkörper 51 und einen Deckel 52 auf.

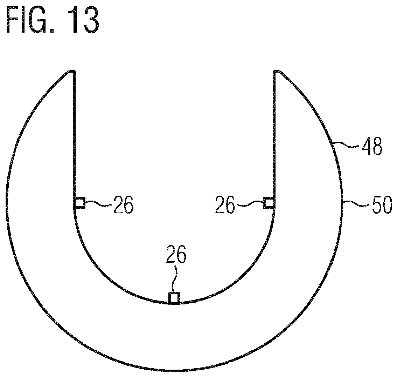

Fig. 13 zeigt eine weitere Ausgestaltung des Halters 48 in einer Aufsicht. Der Halter 48 ist als ein in etwa U-förmiges Ringsegment 50 ausgebildet. Das Ringsegment 50 umfasst Sensoren 26 zur abriebfreien Messung des Lagerspiels.

### Liste der Bezugszeichen

- 100: Ruder

- 10: Wasserfahrzeug
- 11: Schiff
- 12: Kokerrohr
- 13: Schiffsrumpf
- 14: Ruderschaft
- 15: Unteres Ende des Ruderschafts
- 16: Ruderblatt
- 17: Propeller
- 18: Anströmkante
- 19: Skeg

- 20: Flosse
- 21: Anlenkeinrichtung
- 22: Endleiste
- 23: Ruderanlage
- 24: Unteres Ende des Kokerrohrs
- 25: Lagerspielmessvorrichtung
- 26: Sensor
- 26a: Sensor
- 27: Außenseite des Kokerrohrs
- 28: Signalleitmittel
- 29: Kabel

- 30: Signalleitmittelkanal
- 31: U-Profil
- 32: Lagerbuchse
- 33: Axialrichtung
- 34: Sensoraufnahme
- 35: Bohrloch
- 36: Wirbelstromsensor
- 37: Abstand
- 38: Spalt
- 39: Mindestabstand

- 40: Ultraschallsensor
- 41: Außenseite der Lagerbuchse
- 42: Ultraschall-Kontaktmittel
- 43: Wandstärke
- 44: Fahrtrichtung
- 45: Halter
- 46: Grenzfläche
- 47: Stirnseite
- 48: Halter
- 49: Viertelring
- 50: Ringsegment
- 51: Grundkörper
- 52: Deckel
- 53: Stirnseite
- 54: Signalanschluss
- 55: Innenraum
- 56: Sensorkabel
- 57: Verbindungsschraube
- 58: Radialrichtung

## Patentansprüche

1. Ruder (100) für Wasserfahrzeuge (10), insbesondere für Schiffe (11), umfassend einen in einem Kokerrohr (12) anordbaren Ruderschaft (14), ein mit dem Ruderschaft (14) verbundenes Ruderblatt (16) und eine zwischen Kokerrohr (12) und Ruderschaft (14) angeordnete Lagerbuchse (32) sowie eine Lagerspielmessvorrichtung (25), wobei die Lagerspielmessvorrichtung (25) mindestens einen Sensor (26, 26a) zur abriebfreien Messung eines Lagerspiels umfasst, **dadurch gekennzeichnet, dass** der mindestens eine Sensor (26, 26a) kontaktfrei und beabstandet zu dem Ruderschaft (14) angeordnet ist, und/oder dass der mindestens eine Sensor (26, 26a) ein Wirbelstromsensor (36) oder ein Ultraschallsensor (40) ist.

2. Ruder (100) nach Anspruch 1, **dadurch gekennzeichnet, dass** der mindestens eine Sensor (26, 26a) zur abriebfreien Messung eines Lagerspiels ein Sensor (26, 26a) zur abriebfreien Messung eines Abstands (37) zwischen dem Sensor (26, 26a) und dem Ruderschaft (14) und/oder zur abriebfreien Messung einer Wandstärke (43) der Lagerbuchse (32) ist.

3. Ruder (100) nach einem der vorgenannten Ansprüche, **dadurch gekennzeichnet, dass** der Sensor (26, 26a) auf einer Außenseite (41) der Lagerbuchse (32) angeordnet ist, und/oder dass der mindestens eine Sensor (26, 26a) in einer Axialrichtung (33) des Ruderschafts (14) gesehen oberhalb oder unterhalb der Lagerbuchse (32) angeordnet ist.

4. Ruder (100) nach einem der vorgenannten Ansprüche, **dadurch gekennzeichnet, dass** mindestens zwei, bevorzugt mindestens drei, besonders bevorzugt mindestens vier, Sensoren (26, 26a) vorgesehen sind, wobei die Sensoren (26, 26a), insbesondere in regelmäßigen Winkelabständen, über einen Umfang des Kokerrohrs (12) und/oder der Lagerbuchse (32) angeordnet sind, und/oder dass der mindestens eine Sensor (26, 26a), insbesondere mindestens einer der Sensoren (26, 26a), in einem achterseitigen Bereich des, insbesondere feststehenden, Kokerrohrs (12) angeordnet ist.

5. Ruder (100) nach einem der vorgenannten Ansprüche, **dadurch gekennzeichnet, dass** der mindestens eine Sensor (26, 26a) in einer Sensoraufnahme (34), insbesondere in einem Bohrloch (35), des Kokerrohrs (12) angeordnet ist, und bevorzugt im oder mit dem Kokerrohr (12) verschraubt ist.

6. Ruder (100) nach einem der vorgenannten Ansprüche, **dadurch gekennzeichnet, dass** ein Ultraschall-Kontaktmittel (42), insbesondere auf Silikonbasis, zwischen dem Ultraschallsensor (40) und der Lagerbuchse (32) und/oder dem Ruderschaft (14) angeordnet ist.

7. Ruder (100) nach einem der vorgenannten Ansprüche, **dadurch gekennzeichnet, dass** ein Signalleitmittel (28), insbesondere ein Kabel (29), vorgesehen ist, wobei das Signalleitmittel (28) bevorzugt auf einer Außenseite (27) des Kokerrohrs (12) verlaufend angeordnet ist, wobei besonders bevorzugt das Signalleitmittel (28), zumindest abschnittsweise, in einem Signalleitmittelkanal (30) angeordnet ist, wobei der Signalleitmittelkanal (30) auf der Außenseite (27) des Kokerrohrs (12) angeordnet ist, wobei ganz besonders bevorzugt der Signalleitmittelkanal (30) eine Nut, ein U-Profil (31) oder ein Kabelkanal ist.

8. Verfahren zur Messung eines Lagerspiels in einem Ruder (100) nach einem der vorhergehenden Ansprüche, wobei eine abriebfreie Messung des Lagerspiels erfolgt, **dadurch gekennzeichnet, dass** die abriebfreie Messung eine kontaktfreie Messung ist, und/oder dass die abriebfreie Messung eine Ultraschallmessung unter Verwendung eines Ultraschallsensors oder eine Wirbelstrommessung unter Verwendung eines Wirbelstromsensors ist.

9. Verfahren nach Anspruch 8, **dadurch gekennzeichnet, dass** die abriebfreie Messung des Lagerspiels eine abriebfreie Messung eines Abstands (37) zwischen einem Sensor (26, 26a) und einem Ruderschaft (14) und/oder eine abriebfreie Messung einer Wandstärke (43) einer Lagerbuchse (32) ist.

10. Verfahren nach einem der Ansprüche 8 oder 9, **dadurch gekennzeichnet, dass** die Messung automatisch, insbesondere in regelmäßigen Zeitintervallen, erfolgt und/oder dass die Messung an mindestens zwei, bevorzugt an mindestens drei, besonders bevorzugt an mindestens vier Stellen, über einen Umfang einer Lagerbuchse (32) und/oder eines Ruderschafts (14) und/oder eines Kokerrohrs (12) erfolgt.

11. System bestehend aus einem Ruderkokerrohr (12) und einer Lagerspielmessvorrichtung (25) für ein Ruder (100) nach einem der Ansprüche 1 bis 7, wobei die Lagerspielmessvorrichtung (25) mindestens einen Sensor (26, 26a) zur abriebfreien Messung eines Lagerspiels umfasst, wobei der mindestens eine Sensor (26, 26a) zur abriebfreien Messung eines Lagerspiels ein Sensor (26, 26a) zur abriebfreien Messung eines Abstands (37) zwischen dem Sensor (26, 26a) und einem Ruderschaft (14) und/oder zur abriebfreien Messung einer Wandstärke (43) einer Lagerbuchse (32) ist, wobei der mindestens eine Sensor (26, 26a) in einer Sensoraufnahme (34) des Ruderkokerrohrs (12) oder an einem Halter (48), der an dem Ruderkokerrohr (12) befestigt ist, angeordnet und kontaktfrei und beabstandet zu einem Ruderschaft (14) eines Ruders (100) anordbar ist.

12. Verwendung eines Wirbelstromsensors (36) oder eines Ultraschallsensors (40) in einem Ruder (100) nach einem der Ansprüche 1 bis 7.

## Claims

1. A rudder (100) for watercraft (10), in particular for ships (11), comprising a rudder shaft (14) that can be arranged in a trunk pipe (12), a rudder blade (16) connected to the rudder shaft (14) and a bearing bushing (32) arranged between trunk pipe (12) and rudder shaft (14) as well as a bearing clearance measuring device (25), wherein the bearing clearance measuring device (25) comprises at least one sensor (26, 26a) for abrasion-free measurement of a bearing clearance, **characterized in that** the sensor (26, 26a) is arranged in a contact-free manner and at a distance from the rudder shaft (14), and/or **in that** the at least one sensor (26, 26a) is an eddy current sensor (36) or an ultrasound sensor (40).

2. The rudder (100) according to claim 1, **characterized in that** the at least one sensor (26, 26a) for abrasion-free measurement of a bearing clearance is a sensor (26, 26a) for abrasion-free measurement of a distance (37) between the sensor (26, 26a) and the rudder shaft (14) and/or for abrasion-free measurement of a wall thickness (43) of the bearing bushing (32).

3. The rudder (100) according to one of the previous claims, **characterized in that** the sensor (26, 26a) is arranged on an outer side (41) of the bearing bushing (32), and/or that the at least one sensor (26, 26a) is arranged above or below the bearing bushing (32) when viewed in an axial direction (33) of the rudder shaft (14).

4. The rudder (100) according to one of the previous claims, **characterized in that** at least two, preferably at least three, particularly preferably at least four, sensors (26, 26a) are provided, wherein the sensors (26, 26a) are arranged, in particular at regular angular spacings, over a circumference of the trunk pipe (12) and/or the bearing bushing (32), and/or **in that** the at least one sensor (26, 26a), in particular at least one of the sensors (26, 26a), is arranged in an aft region of the, in particular fixed, trunk pipe (12).

5. The rudder (100) according to one of the previous claims, **characterized in that** the at least one sensor (26, 26a) is arranged in a sensor receptacle (34), in particular in a drill hole (35), of the trunk pipe (12) and is preferably screwed in or to the trunk pipe (12).

6. The rudder (100) according to one of the previous claims, **characterized in that** an ultrasound contact means (42), in particular silicone-based, is arranged between the ultrasound sensor (40) and the bearing bushing (32) and/or the rudder shaft (14).

7. The rudder (100) according to one of the previous claims, **characterized in that** a signal conducting means (28), in particular a cable (29), is provided, wherein the signal conducting means (28) is preferably arranged to run on an outer side (27) of the trunk pipe (12), wherein the signal conducting means (28) is particularly preferably arranged, at least in sections, in a signal conducting means channel (30), wherein the signal conducting means channel (30) is arranged on the outer side (27) of the trunk pipe (12), wherein quite particularly preferably the signal conducting means channel (30) is a groove, a U-profile (31) or a cable channel.

8. A method for measuring a bearing clearance in a rudder (100) according to one of the preceding claims, wherein an abrasion-free measurement of the bearing clearance is made, **characterized in that** the abrasion-free measurement is a contact-free measurement, and/or **in that** the abrasion-free measurement is an ultrasound measurement using an ultrasound sensor, or an eddy current measurement using an eddy current sensor.

9. The method according to claim 8, **characterized in that** the abrasion-free measurement of the bearing clearance is an abrasion-free measurement of a distance (37) between a sensor (26, 26a) and a rudder shaft (14) and/or an abrasion-free measurement of a wall thickness (43) of a bearing bushing (32).

10. The method according to one of claims 8 or 9, **characterized in that** the measurement is made automatically, in particular at regular time intervals, and/or that the measurement is made at at least two, preferably at at least three, particularly preferably at at least four positions over a circumference of a bearing bushing (32) and/or a rudder shaft (14) and/or a trunk pipe (12).

11. System consisting of a rudder trunk pipe (12) and a bearing clearance measuring device (25) for a rudder (100) according to one of claims 1 to 7, wherein the bearing clearance measuring device (25) comprises at least one sensor (26, 26a) for abrasion-free measurement of a bearing clearance, wherein the at least one sensor (26, 26a) for abrasion-free measurement of a bearing clearance is a sensor (26, 26a) for abrasion-free measurement of a distance (37) between the sensor (26, 26a) and a rudder shaft (14) and/or for abrasion-free measurement of a wall thickness (43) of a bearing bushing (32), wherein the at least one sensor (26, 26a) is arranged in a sensor receptacle (34) of the rudder trunk pipe (12) or at a holder (48) which is attached to the rudder trunk pipe (12) and can be arranged in a contact-free manner and at a distance from the rudder shaft (14) of a rudder (100).

12. Use of an eddy current sensor (36) or an ultrasound sensor (40) in a rudder (100) according to one of claims 1 to 7.

## Revendications

1. Gouvernail (100), pour navires (10), en particulier pour bateaux (11), comprenant une mèche de gouvernail (14) pouvant être disposée dans un tube de jaumière (12), un safran de gouvernail (16) relié à la mèche de gouvernail (14) et un coussinet (32) disposé entre le tube de jaumière (12) et la mèche de gouvernail (14) ainsi qu'un dispositif de mesure de jeu de palier (25) sachant que le dispositif de mesure de jeu de palier (25) comprend au moins un capteur (26, 26a) pour la mesure non-abrasive d'un jeu de palier,
**caractérisé en ce que** l'au moins un capteur (26, 26a) est disposé sans contact et à distance de la mèche de gouvernail (14), et/ou **en ce que** l'au moins un capteur (26, 26a) est un capteur à courants de Foucault (36) ou un capteur à ultrasons (40).

2. Gouvernail (100) selon la revendication 1, **caractérisé en ce que** l'au moins un capteur (26, 26a) pour la mesure non-abrasive d'un jeu de palier, est un capteur (26, 26a) pour la mesure non-abrasive d'une distance (37) située entre le capteur (26, 26a) et la mèche de gouvernail (14) et/ou pour la mesure non-abrasive d'une épaisseur de paroi (43) du coussinet (32).

3. Gouvernail (100) selon l'une quelconque des revendications précédentes, **caractérisé en ce que** le capteur (26, 26a) est disposé sur un côté extérieur (41) du coussinet (32) et/ou **en ce que** l'au moins un capteur (26, 26a) est disposé dans une direction axiale (33) de la mèche de gouvernail (14) vu au-dessus ou en dessous du coussinet (32).

4. Gouvernail (100) selon l'une quelconque des revendications précédentes, **caractérisé en ce qu'**au moins deux, de préférence au moins trois, en particulier de préférence au moins quatre capteurs (26, 26a) sont prévus, sachant que les capteurs (26, 26a), sont disposés, en particulier dans des distances angulaires régulières, sur une périphérie du tube de jaumière (12) et/ou du coussinet (32), et/ou **en ce que** l'au moins un capteur (26, 26a), en particulier au moins un des capteurs (26, 26a), est disposé dans une zone arrière du tube de jaumière (12) en particulier fixe.

5. Gouvernail (100) selon l'une quelconque des revendications précédentes, **caractérisé en ce que** l'au moins un capteur (26, 26a) est disposé dans un logement de capteur (34) en particulier dans un alésage (35) du tube de jaumière (12) et est vissé de préférence dans ou avec le tube de jaumière (12).

6. Gouvernail (100) selon l'une quelconque des revendications précédentes, **caractérisé en ce qu'**un moyen de contact à ultrasons (42), en particulier à base de silicone, est situé entre le capteur à ultrasons (40) et le coussinet (32) et/ou la mèche de gouvernail (14) .

7. Gouvernail (100) selon l'une quelconque des revendications précédentes, **caractérisé en ce qu'**un moyen conducteur de signaux (28), en particulier un câble (29) est prévu, sachant que le moyen conducteur de signaux (28) est disposé passant de préférence sur un côté extérieur (27) du tube de jaumière (12), sachant en particulier que de préférence le moyen conducteur de signaux (28) est au moins en partie situé dans un conduit de moyen conducteur de signaux (30), sachant que le conduit de moyen conducteur de signaux (30) est disposé sur le côté extérieur (27) du tube de jaumière (12), sachant tout particulièrement que de préférence le conduit de moyen conducteur de signaux (30) est une rainure, un profilé en U (31) ou un conduit pour câble.

8. Procédé pour la mesure d'un jeu de palier dans un gouvernail (100) selon l'une quelconque des revendications précédentes, sachant qu'une mesure non-abrasive du jeu de palier a lieu, **caractérisé en ce que** la mesure non-abrasive est une mesure sans contact et/ou **en ce que** la mesure non-abrasive est une mesure par ultrasons en utilisant un capteur à ultrasons ou une mesure par courants de Foucault en utilisant un capteur à courants de Foucault.

9. Procédé selon la revendication 8, **caractérisé en ce que** la mesure non-abrasive du jeu de palier est une mesure non-abrasive d'une distance (37) située entre un capteur (26, 26a) et une mèche de gouvernail (14) et/ou une mesure non-abrasive d'une épaisseur de paroi (43) d'un coussinet (32).

10. Procédé selon l'une quelconque des revendications 8 ou 9, **caractérisé en ce que** la mesure a lieu automatiquement, en particulier à des intervalles de temps réguliers et/ou **en ce que** la mesure a lieu au moins sur deux endroits, de préférence sur au moins trois, en particulier de préférence sur au moins quatre endroits sur une périphérie d'un coussinet (32) et/ou d'une mèche de gouvernail (14) et/ou d'un tube de jaumière (12).

11. Système composé d'un tube de jaumière (12) et d'un dispositif de mesure de jeu de palier (25) pour un gouvernail (100) selon l'une quelconque des revendications 1 à 7, sachant que le dispositif de mesure de jeu de palier (25) comprend au moins un capteur (26, 26a) pour la mesure non-abrasive d'un jeu de palier, sachant que l'au moins un capteur (26, 26a) pour la mesure non-abrasive d'un jeu de palier, est un capteur (26, 26a) pour la mesure non-abrasive d'une distance (37) située entre le capteur (26, 26a) et une mèche de gouvernail (14) et/ou pour la mesure non-abrasive d'une épaisseur de paroi (43) d'un coussinet (32), sachant que l'au moins un capteur (26, 26a) est fixé dans un logement de capteur (34) du tube de jaumière de gouvernail (12) ou sur un support (48), qui est fixé sur le tube de jaumière de gouvernail (12), et peut être disposé sans contact et à distance d'une mèche de gouvernail (14) d'un gouvernail (100).

12. Utilisation d'un capteur à courants de Foucault (36) ou d'un capteur à ultrasons (40) dans un gouvernail (100) selon l'une quelconque des revendications 1 à 7.
